# EUROPÄISCHE PATENTSCHRIFT

(11) **EP 2 707 132 B1**
(45) Veröffentlichungstag und Bekanntmachung des Hinweises auf die Patenterteilung: **13.06.2018**
(21) Anmeldenummer: 12724086.9
(22) Anmeldetag: 27.04.2012
(51) Int. Cl.: B29C 63/10, B29C 65/00, B29C 65/10, B29C 65/48, B29C 65/50, B29D 23/00, B32B 1/08, F16L 9/12

(54) **VERFAHREN ZUR HERSTELLUNG EINES ROHRS ODER ROHRHALBZEUGS UND ROHR ODER ROHRHALBZEUG FÜR DEN CHEMISCHEN APPARATEBAU**
METHOD FOR PRODUCING A TUBE OR SEMIFINISHED TUBE AND TUBE OR SEMIFINISHED TUBE FOR CHEMICAL APPARATUS CONSTRUCTION
PROCÉDÉ DE FABRICATION D'UN TUBE OU D'UN TUBE SEMI-FINI, ET TUBE OU TUBE SEMI-FINI POUR LA CONSTRUCTION D'ÉQUIPEMENTS CHIMIQUES

(30) Priorität: 12.05.2011 DE 102011075745
(43) Veröffentlichungstag der Anmeldung: 19.03.2014
(73) Patentinhaber: Simona AG, 55606 Kirn (DE)
(72) Erfinder: LITZENBURGER, Achim, 55743 Fischbach/Nahe (DE)
(74) Vertreter: advotec.
(86) Internationale Anmeldenummer: PCT/EP2012/057823
(87) Internationale Veröffentlichungsnummer: WO 2012/152605

(56) Entgegenhaltungen:
- EP-A2- 0 577 134
- DE-A1- 2 655 597
- Hans-Joachim Streitberger: "Fluorharze", Römpp online 4.0, 1 August 2006 (2006-08-01), pages 1-1, XP055402879, Retrieved from the Internet: URL:https://roempp.thieme.de/roempp4.0/do/ data/RD-06-02436 [retrieved on 2017-08-31]

## Beschreibung

Die Erfindung betrifft Verfahren zur Herstellung eines Rohrs oder Rohrhalbzeugs, insbesondere für den chemischen Apparatebau, nach dem Oberbegriff des Anspruchs 1.

Weiter betrifft die Erfindung ein Rohr oder Rohrhalbzeug, das ,insbesondere im chemischen Apparatebau, zur Aufbewahrung oder zum Transport von aggressiven Einlagerungsmedien eingesetzt werden kann. Gattungsgemäße Bauteile für den chemischen Apparatebau sind aus der EP 0 577 134 B1 und der US 3,723,234 bekannt. Die dort beschriebenen Bauteile, bei denen es sich insbesondere auch um Rohre handeln kann, weisen einen mehrschichtigen Aufbau auf. Die Innenschicht wird dabei von einem gegen das aufzunehmende Einlagerungsmedium chemisch widerstandfähigen Thermoplast gebildet. Die Eigenschaften des Thermoplasts, dass bei den gattungsgemäßen Rohren und Rohrhalbzeugen ein massives Innenrohr bildet sind also spezifisch auf die Widerstandfähigkeit gegen das an der Innenseite zur Anlage kommenden Einlagerungsmedium spezifizierbar. Aufgrund ihrer inneren Struktur sind diese Thermoplastinnenrohre jedoch aus mechanischer Sicht nur ungenügend stabil. Gattungsgemäß ist es deshalb vorgesehen, dass auf der Außenseite der Innenrohre eine Haftvermittlungsschicht mit einer insbesondere flächigen Textilstruktur angebracht wird. Bei dieser Haftvermittlungsschicht kann es sich beispielsweise um ein gestricktes oder gewebtes oder gewirktes Glasfaserelement mit Textilstruktur handeln. Die Textilstruktur kann dabei die Gestalt eines Textilbandes oder Textilschlauches aufweisen. Die Haftvermittlungsschicht hat die Aufgabe die Anbringung eines das Innenrohr vollständig umfassenden Stützrohrs zu ermöglichen. Durch die Haftvermittlungsschicht wird dabei eine so hohe Haftung zwischen dem Innenrohr und dem äußeren Stützrohr realisiert, dass das chemisch widerstandfähige Innenrohr durch das mechanisch hochfeste Stützrohr ausreichend abgestützt wird.

Mit anderen Worten bedeutet dies, dass die gattungsgemäßen Rohre einen mehrschichtigen Aufbau aufweisen, dessen massive innere Schicht gegenüber den jeweils anfallenden Angriffen, beispielsweise durch aggressive Chemikalien widerstandfähig sind, wobei die Haftvermittlungsschicht die notwendige Haftung zwischen der inerten bzw. resistenten massiven Innenschicht und dem äußeren Trägermaterial vermittelt. Soweit es sich um Rohrhalbzeuge handelt, weisen diese Rohrhalbzeuge zunächst nur das massive Innenrohr und die darauf angebrachte Haftvermittlungsschicht auf. Diese Rohrhalbzeuge können dann durch Anbringung des äußeren Stützrohrs vom jeweiligen Verwender vervollständigt werden.

Bei der Herstellung der aus dem Stand der Technik bekannten Rohre bzw. Rohrhalbzeuge wird nach der Extrusion des thermoplastischen Innenrohrs die Außenseite des Innenrohrs erhitzt und die Haftvermittlungsschicht auf die erweichte Außenseite des Innenrohrs aufgebracht. Aufgrund der Plastizität der Außenseite des Innenrohrs wird die Textilstruktur der Haftvermittlungsschicht in das thermoplastische Innenrohrs eingebettet und dort mechanisch verkeilt. Im Ergebnis bildet sich also ein Formschluss zwischen dem Material des Innenrohrs und der textilen Haftvermittlungsschicht aus. Dieser formschlüssige Verband zwischen der Haftvermittlungsschicht und dem Innenrohr hat den Nachteil, dass es je nach Materialpaarung relativ leicht zu Delaminierungseffekten kommen kann. Dringt nämlich der plastifizierte Teil des Innenrohrs nicht ausreichend tief in die Textilstruktur der Haftvermittlungsschicht ein, so kann sich die Haftvermittlungsschicht an der Grenze zum Innenrohr hin leicht ablösen und es dadurch zu Beschädigungen des gesamten Rohrs kommen. Überlappen die Bandagen der Haftvermittlungsschicht in den Randbereichen, kann dies die Ablösungen beschleunigen.

Rohr oder Rohrhalbzeuge im Sinne der Erfindung sollen alle Verbundbauteile mit geschlossenem Querschnitt sein. Insbesondere sind auch Fittings zur Herstellung von Rohrverbindungen Rohre im Sinne der Erfindung.

Aus der DE 26 55 597 A1 ist ein Verfahren zur Herstellung eines Rohres bekannt, bei dem für die Haftvermittlungsschicht ein Glasfasergewebe eingesetzt wird, welches zuvor mit einem Kunststoff benetzt wurde. Bei Aufbringung des Glasfasergewebes auf das Innenrohr werden die Außenseite des Innenrohrs und das mit einer Kunststoffschicht überzogene Glasfasergewebe bis über den Schmelzpunkt erhitzt, so dass die Kunststoffe von Innenrohr und Gasfasergewebe miteinander verschmelzen.

Mit diesem Verfahren können beständige hochfeste Rohre erzielt werden, jedoch ist die Recyclingfähigkeit durch den Einsatz des Glasfasergewebes bei einem ansonsten wieder verwendbarem thermoplastischem Kunststoff stark eingeschränkt.

Aufgabe der vorliegenden Erfindung ist es deshalb ein Verfahren zur Herstellung eines Rohrs oder Rohrhalbzeugs für den chemischen Apparatebau vorzuschlagen, das in der Grenzschicht zwischen der Haftvermittlungsschicht und dem Innenrohr einen größeren Delaminierungswiderstand aufweist und hierbei eine gute Recyclingfähigkeit gewährleistet. Weiter ist es Aufgabe der vorliegenden Erfindung ein solches Rohr bzw. Rohrhalbzeug vorzuschlagen, das insbesondere mit dem erfindungsgemäßen Verfahren herstellbar ist.

Diese Aufgaben werden durch ein Verfahren bzw. ein Rohr oder Rohrhalbzeug nach der Lehre der unabhängigen Hauptansprüche gelöst.

Das erfindungsgemäße Verfahren beruht auf der Grundüberlegung, dass sowohl das massive Innenrohr als auch die darauf angebrachte Haftvermittlungsschicht jeweils aus einem schmelzbaren, insbesondere art- oder polymergleichen, Thermoplast hergestellt sind. Bei der Herstellung der Verbindung zwischen dem Innenrohr und der Haftvermittlungsschicht wird sowohl das Material des Innenrohrs als auch das Material der Haftvermittlungsschicht teilweise aufgeschmolzen, wobei allerdings zum einen die Textilstruktur der Haftvermittlungsschicht sowie die Rohrstruktur des Innenrohrs zumindest teilweise erhalten bleiben müssen. Die Haftvermittlungsschicht und das Innenrohr werden dann in der Schmelzzone miteinander in Kontakt gebracht und stoffschlüssig miteinander verschweißt. Auch eventuell überlappende Bandagen der Haftvermittlungsschicht werden vom aufgeschmolzen Material des Innenrohrs durchdrungen und verschweißt. Durch die stoffschlüssige Verbindung wird ein sehr hoher Delaminierungswiderstand zwischen der Haftvermittlungsschicht und dem Innenrohr erreicht.

Zur erleichterten Durchführung des erfindungsgemäßen Verfahrens weist das Innenrohr zumindest zwei unterschiedliche Materialschichten auf, die coextrudiert wurden. Die Innenschicht des Innenrohrs kann dann spezifisch auf die Anforderungen im Hinblick auf den Kontakt mit dem Einlagerungsmaterial spezifiziert werden, wohingegen die Außenschicht des Innenrohrs im Hinblick auf das Verschweißen mit der Haftvermittlungsschicht spezifizierbar ist.

Dabei ist vorgesehen, dass der Thermoplast der äußeren Materialschicht am Innenrohr eine niedrigere Viskosität oder einen niedrigeren Schmelzbereich als das Thermoplast der inneren Materialschicht am Innenrohr aufweist. Diese niedrigere Viskosität oder der niedrigere Schmelzbereich erlaubt es die äußere Materialschicht des Innenrohrs mit relativ wenig Wärme aufzuschmelzen. Ein unerwünschtes Zuweitgehen des Aufschmelzens des Innenrohrs wird durch die höhere Viskosität an der inneren Materialschicht des Innenrohrs zuverlässig ausgeschlossen.

Um die Außenseite des Innenrohrs und die Innenseite der Haftvermittlungsschicht aufzuschmelzen, kann gemäß einer ersten Verfahrensvariante zumindest eine Heizeinrichtung vorgesehen werden, mit der die beiden Teile jeweils unmittelbar erhitzt und teilweise auch verschmolzen werden. Im Ergebnis ergeben sich dadurch zwei getrennte Schmelzzonen, die dann miteinander in Kontakt gebracht und dadurch miteinander verschweißt werden.

Gemäß einer zweiten, alternativen Verfahrensvariante wird zunächst nur die Außenseite des Innenrohrs mit einer Heizeinrichtung erhitzt und aufgeschmolzen. Das Maß der Erhitzung und die Menge des am Innenrohr aufgeschmolzenen Materials ist dabei so zu wählen, dass anschließend bei der Kontaktierung der zunächst noch nicht aufgeschmolzenen Haftvermittlungsschicht ein Teil des Materials der Haftvermittlungsschicht durch den Kontakt mit der Schmelzzone des Innenrohrs durch Wärmeübertragung aus dem Thermoplast des Innenrohrs ebenfalls teilweise aufschmilzt und dann mit dem Innenrohr verschweißt. Dies bedeutet also, dass gemäß der zweiten Verfahrensvariante nur das Innenrohr unmittelbar erhitzt und aufgeschmolzen wird, wohingegen die Haftvermittlungsschicht mittelbar, nämlich durch den Kontakt mit der Schmelzzone des Innenrohrs, erhitzt und aufgeschmolzen wird.

Besonders einfach und kostengünstig kann das erfindungsgemäße Verfahren durchgeführt werden, wenn die Außenseite des Innenrohrs in einer Vorheizeinrichtung über den Schmelzpunkt erhitzt und anschließend das Material der Haftvermittlungsschicht auf die erhitzte Schmelzzone an der Außenseite des Innenrohrs aufgebracht wird.

Besonders kostengünstig ist es dabei, wenn die Haftvermittlungsschicht aus einem textilen Materialstreifen hergestellt wird. Dieser textile Materialstreifen kann dann auf die erhitzte Schmelzzone an der Außenseite des Innenrohrs spiralförmig aufgewickelt werden und somit eine rohrförmige Haftvermittlungsschicht an der Außenseite des Innenrohrs bilden.

Alternativ dazu kann die Haftvermittlungsschicht auch durch Überziehen eines textilen Materialschlauchs auf die erhitzte Schmelzzone an der Außenseite des Innenrohrs gebildet werden, so dass keine Stoßnaht gebildet wird.

Das erfindungsgemäße Verfahren erfordert eine genaue Steuerung des Erhitzungsprozesses an der Außenseite des Innenrohrs und/oder an der Innenseite der Haftvermittlungsschicht. Diese zielgenaue Erhitzung des Materials kann besonders einfach dadurch realisiert werden, dass die Erhitzung durch die Zuführung von Heißluft oder Wärmestrahlung erfolgt. Alternativ dazu ist aber auch die Erwärmung mit einer offenen Flamme möglich.

Besonders einfach und mechanisch hochfest lassen sich das Innenrohr und die Haftvermittlungsschicht dann miteinander verschmelzen, wenn sowohl das Innenrohr als auch die Haftvermittlungsschicht aus einem artgleichen Thermoplast hergestellt sind. Gemäß einer bevorzugten Variante werden das Innenrohr und die Haftvermittlungsschicht deshalb jeweils aus artgleichen Polyolefinen, insbesondere Polypropylen hergestellt. Besonders geeignet sind auch teil- und vollflurierte Kunststoffe.

Das erfindungsgemäße Rohr bzw. Rohrhalbzeug, bei dem gegenüber dem erfindungsgemäßen Rohr noch das äußere Stützrohr angebracht werden muss, ist durch die Verschweißung der Thermoplaste an der Außenseite des Innenrohrs und der Innenseite der Haftvermittlungsschicht gekennzeichnet. An der Außenseite der Haftvermittlungsschicht muss die Textilstruktur erhalten bleiben, um ein Anhaften des Stützrohrs an der Außenseite der Haftvermittlungsschicht zu gewährleisten.

Die Haftvermittlungsschicht selbst sollte bevorzugt eine dreidimensionale Textilstruktur aufweisen.

Die Textilstruktur der Haftvermittlungsschicht kann dabei in der Art eines Gewebes, gestrickt oder gewirkt ausgebildet sein.

Verschiedene Aspekte der Erfindung sind in den Zeichnungen schematisch dargestellt und werden nachfolgend beispielhaft erläutert.

Es zeigen:
- Fig. 1: ein zweischichtiges Innenrohr mit einer auf eine Innenschicht coextrudierten Außenschicht;
- Fig. 2: das Innenrohr gemäß Fig. 1 während der Erhitzung und dem Aufschmelzen der äußeren Schicht;
- Fig. 3: die Aufbringung einer textilen Haftvermittlungsschicht auf das an der Außenseite aufgeschmolzene Innenrohr gemäß Fig. 2;
- Fig. 4: das Rohrhalbzeug mit einem massiven Innenrohr und einer an der Außenseite angebrachten textilen Haftvermittlungsschicht nach Auskühlen des Innenrohrs gemäß Fig. 3;
- Fig. 5: das Rohrhalbzeug gemäß Fig. 4 nach Anbringung eines äußeren Stützrohrs.

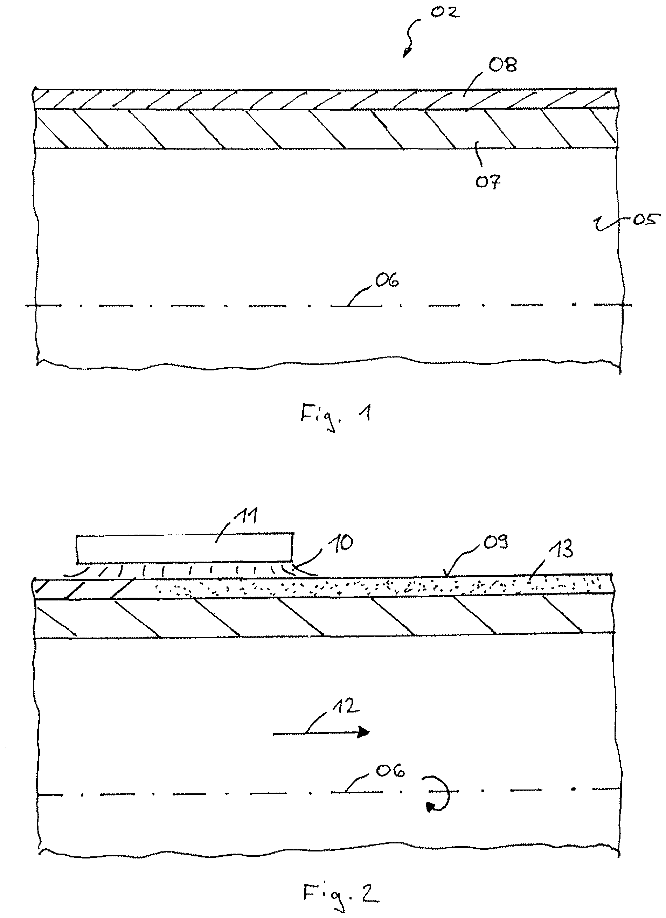

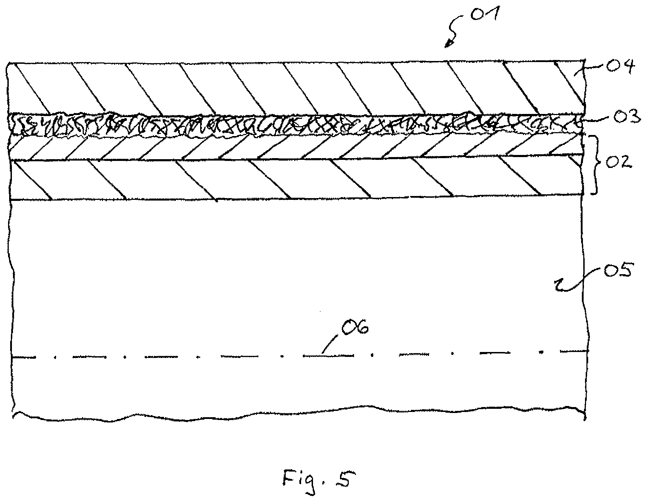

Fig. 1 bis Fig. 5 zeigen in schematisierter Form beispielhaft die Herstellung eines Rohrs 01 (siehe Fig. 5) mit einem massiven Innenrohr 02, einer textilen Haftvermittlungsschicht 03 und einem äußeren Stützrohr 04. Soll ein solches Rohr 01 im Apparatebau zur Speicherung oder zum Transport von aggressiven Chemikalien, insbesondere starken Säuren, Verwendung finden, wird das Innenrohr 02 aus einem Thermoplast hergestellt, das gegen den Angriff der an der Innenseite 05 zur Anlage kommenden Einlagerungsmedien chemisch resistent ist. In den Zeichnungen gemäß Fig. 1 bis Fig. 5 sind die diversen Rohre jeweils nur in der oberen Hälfte zeichnerisch dargestellt, d.h. die Rohre sind jeweils kreissymmetrisch zur Mittelachse 06 ausgebildet.

Ausgangspunkt zur Herstellung des Rohrs 01 ist ein coextrudiertes Innenrohr 02, wie es in Fig. 1 dargestellt ist. Das Innenrohr 02 weist eine Innenschicht 07 und eine Außenschicht 08 auf und ist durch Coextrusion von zwei Thermoplasten hergestellt. Das Material der Innenschicht 07 ist dahingehend spezifiziert, dass das Material eine hohe chemische Resistenz gegen die Einlagerungsmedien an der Innenseite 05 aufweist. Das Thermoplastmaterial zur Bildung der Außenschicht 08 dagegen weist eine möglichst geringe Viskosität auf, damit diese Material gut aufgeschmolzen und verschweißt werden kann. In der Grenzschicht zwischen der Innenschicht 07 und der Außenschicht 08 müssen sich die beiden Materialien selbstverständlich gut miteinander vertragen, damit es nicht zu Delaminierungseffekten kommt.

Wie in Fig. 2 dargestellt, wird die Außenseite 09 des rotierenden Innenrohrs 02 durch Beaufschlagung mit Heißluft 10 aus einer Heißluftdüse 11 erhitzt. Das Material der Außenschicht 08 wird dabei zumindest teilweise aufgeschmolzen. Um eine gleichmäßige Aufschmelzung der Außenschicht 08 zu realisieren, rotiert das Innenrohr 02 und wird gleichzeitig in Richtung des Bewegungspfeils 12 axial abgezogen. Durch die Erwärmung der Außenseite 09 mit Heißluft 10 wird eine Schmelzzone 13 gebildet.

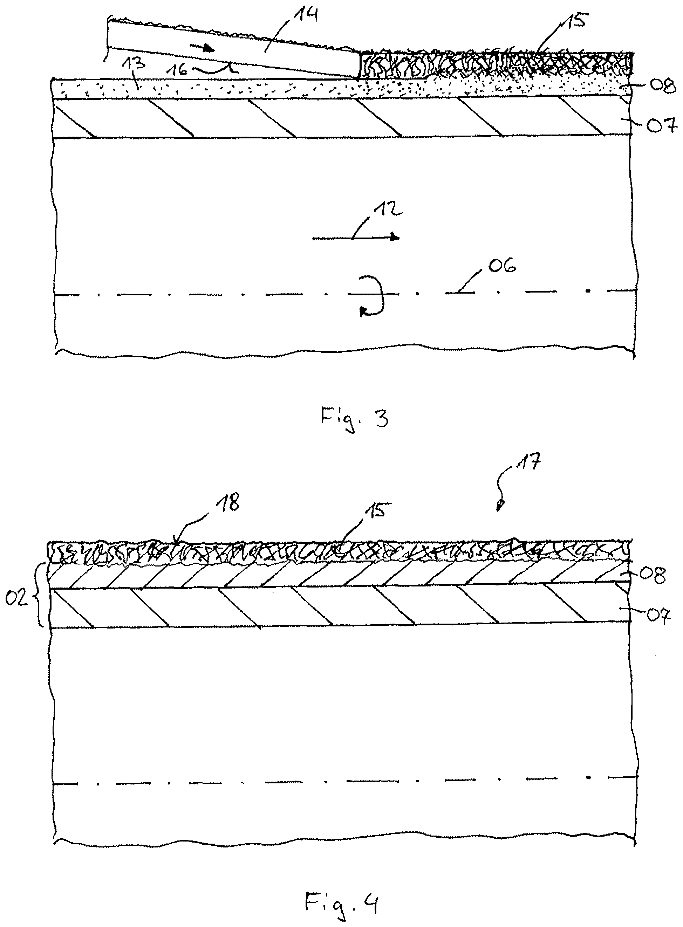

Fig. 3 zeigt das Innenrohr 02 bei der Aufbringung eines textilen Materialstreifens 14 auf die Schmelzzone 13 zur Bildung der Haftvermittlungsschicht 15. Durch Rotation des Innenrohrs 02 und gleichzeitigen Axialabzug in Richtung des Bewegungspfeils 12 wird der textile Materialstreifen 14 spiralförmig um den Umfang des Innenrohrs 13 gewickelt und bildet dadurch eine zylinderförmige Struktur, die das Innenrohr 02 allseitig umfasst. Durch die in der Schmelzzone 13 enthaltene Prozesswärme wird die Innenseite 16 des Materialstreifens 14 beim Kontakt mit der Schmelzzone 13 teilweise aufgeschmolzen und stoffschlüssig mit dem Thermoplast der Außenschicht 08 verschweißt.

Fig. 4 zeigt das durch die Anbringung der Haftvermittlungsschicht 15 auf dem Innenrohr 02 hergestellte Rohrhalbzeug 17 nach Erstarrung der Thermoplaste in der Schmelzzone 13. Die Innenseite 16 der Haftvermittlungsschicht 15 und die Außenseite 09 der Außenschicht 08 sind stoffschlüssig miteinander verschweißt. Das Aufschmelzen der Vermittlungsschicht 15 ist dabei auf eine innere Zone begrenzt, so dass die Textilstruktur an der Außenseite 18 der Haftvermittlungsschicht 15 erhalten bleibt.

Fig. 5 zeigt, wie in einem letzten Schritt aus dem Rohrhalbzeug 17 ein Rohr 01 durch Anbringung des Stützrohrs 04 hergestellt wird. Das Stützrohr 04 dient dabei insbesondere der mechanischen Festigkeit des Rohrs 01 und kann beispielsweise aus einem glasfaserverstärktem Harz auflaminiert werden.

## Patentansprüche

1. Verfahren zur Herstellung eines Rohrs (01) oder Rohrhalbzeugs (17), insbesondere für den chemischen Apparatebau, zur Aufbewahrung oder zum Transport von aggressiven Einlagerungsmedien, mit einem massiven Innenrohr (02), auf dessen Innenseite (05) das Einlagerungsmedium zur Anlage kommen kann und das aus einem thermoplastischen Polyolefin hergestellt ist, und mit einer auf der Außenseite (09) des Innenrohrs (02) angebrachten Haftvermittlungsschicht (03), die eine Textilstruktur aufweist und aus einem artgleichen Thermoplast hergestellt ist, wobei die Textilstruktur der Haftvermittlungsschicht (03) zur Anbringung eines Stützrohrs (04) an der Außenseite (18) der Haftvermittlungsschicht (03) geeignet ist,
**dadurch gekennzeichnet,**
**dass** das Innenrohr (02) mit zumindest zwei unterschiedlichen Materialschichten (07, 08) coextrudiert wird, wobei das Thermoplast der äußeren Materialschicht (08) des Innenrohrs (02) eine niedrigere Viskosität oder einen niedrigeren Schmelzbereich als das Thermoplast der inneren Materialschicht (07) des Innenrohrs (02) aufweist, wobei
a) die Außenseite (09) des Innenrohrs (02) und die Innenseite (16) der Haftvermittlungsschicht (03) über den Schmelzpunkt der jeweiligen Thermoplaste erhitzt und teilweise aufgeschmolzen werden, wobei die Textilstruktur an der Außenseite (18) der Haftvermittlungsschicht (03) zumindest teilweise erhalten bleibt;
b) die Außenseite (09) des Innenrohrs (02) und die Innenseite (16) der Haftvermittlungsschicht (03) in einer Schmelzzone miteinander kontaktiert und stoffschlüssig miteinander verschweißt werden.

2. Verfahren nach Anspruch 1,
**dadurch gekennzeichnet,**
**dass** die Außenseite (09) des Innenrohrs (02) und die Innenseite (16) der Haftvermittlungsschicht (03) unmittelbar erhitzt und getrennt voneinander teilweise aufgeschmolzen werden und beim Kontakt der beiden Schmelzzonen miteinander verschweißen.

3. Verfahren nach Anspruch 1,
**dadurch gekennzeichnet,**
**dass** die Außenseite (09) des Innenrohrs (02) mit einer Heizeinrichtung (11) unmittelbar so stark erhitzt und aufgeschmolzen wird, dass die Innenseite (16) der Haftvermittlungsschicht (03) beim Kontakt mit der Schmelzzone des Innenrohrs (03) durch Wärmeübertragung aus dem Thermoplast des Innenrohrs (03) teilweise aufgeschmolzen und mit dem Innenrohr (03) verschweißt wird.

4. Verfahren nach einem der Ansprüche 1 bis 3,
**dadurch gekennzeichnet,**
**dass** die Außenseite (09) des Innenrohrs (02) in einer Heizeinrichtung (11) über den Schmelzpunkt erhitzt wird und die Haftvermittlungsschicht (03) anschließend auf die erhitzte Schmelzzone an der Außenseite (09) des Innenrohrs (02) aufgebracht wird.

5. Verfahren nach einem der Ansprüche 1 bis 4,
**dadurch gekennzeichnet,**
**dass** die Haftvermittlungsschicht (03) durch Aufwickeln eines textilen Materialstreifens (14) auf die erhitzte Schmelzzone an der Außenseite (09) des Innenrohrs (02) gebildet wird.

6. Verfahren nach einem der Ansprüche 1 bis 4,
**dadurch gekennzeichnet,**
**dass** die Haftvermittlungsschicht durch Überziehen eines textilen Materialschlauchs auf die erhitzte Schmelzzone an der Außenseite des Innenrohrs gebildet wird.

7. Verfahren nach einem der Ansprüche 1 bis 6,
**dadurch gekennzeichnet,**
**dass** die Erhitzung der Außenseite (09) des Innenrohrs (02) und/oder der Innenseite (07) der Haftvermittlungsschicht (03) durch Zuführung von Heißluft (10) oder Wärmestrahlung erfolgt.

8. Rohr (01) oder Rohrhalbzeug (02), insbesondere für den chemischen Apparatebau, zur Aufbewahrung oder zum Transport von aggressiven Einlagerungsmedien mit einem massiven Innenrohr (02), auf dessen Innenseite (05) das Einlagerungsmedium zur Anlage kommen kann und das aus einem thermoplastischen Polyolefin hergestellt ist, und mit einer auf der Außenseite (09) des Innenrohrs (02) angebrachten Haftvermittlungsschicht (03), die eine Textilstruktur aufweist und aus einem Thermoplast hergestellt ist, wobei die Textilstruktur der Haftvermittlungsschicht (03) zur Anbringung eines Stützrohrs (04) an der Außenseite (18) der Haftvermittlungsschicht (03) geeignet ist, wobei das Innenrohr (02) und die Haftvermittlungsschicht (03) aus artgleichen Thermoplasten hergestellt sind,
**dadurch gekennzeichnet,**
**dass** das Innenrohr (02) zumindest zwei coextrudierte Materialschichten (07, 08) umfasst, wobei das Thermoplast der äußeren Materialschicht (08) des Innenrohrs (02) eine niedrigere Viskosität oder einen niedrigeren Schmelzbereich als das Thermoplast der inneren Materialschicht (07) des Innenrohrs (02) aufweist, wobei die Außenseite (09) des Innenrohrs (02) und die Innenseite (16) der Haftvermittlungsschicht (03) stoffschlüssig miteinander verschweißt sind, wobei an der Außenseite (18) der Haftvermittlungsschicht (03) die Textilstruktur erhalten ist.

9. Rohr oder Rohrhalbzeug nach Anspruch 8,
**dadurch gekennzeichnet,**
**dass** die Haftvermittlungsschicht (03) von einem auf die Außenseite (09) des Innenrohrs (02) aufgewickelten oder aufgerollten, textilen Materialstreifen (14) oder einem übergezogenem Materialschlauch gebildet ist.

10. Rohr oder Rohrhalbzeug nach einem der Ansprüche 8 bis 9,
**dadurch gekennzeichnet,**
**dass** die Haftvermittlungsschicht (03) eine dreidimensionale Textilstruktur aufweist.

11. Rohr oder Rohrhalbzeug nach Anspruch 10,
**dadurch gekennzeichnet,**
**dass** die Textilstruktur der Haftvermittlungsschicht (03) in der Art eines Gewebes, Gestricks oder Gewirks ausgebildet ist.

## Claims

1. A method for producing a tube (01) or a semi-finished tube (17), in particular for chemical apparatus construction, for storing or for transporting aggressive storage media, comprising a solid inner tube (02) with the inner side (05) of which the storage medium can come into contact and which is made of a thermoplastic polyolefin, and comprising an adhesion-promoting layer (03) applied to the outer side (09) of the inner tube (02), which has a textile structure and is made of a thermoplastic of the same type, the textile structure of the adhesion-promoting layer (03) being suitable for mounting a support tube (04) on the outer side (18) of the adhesion-promoting layer (03),
**characterised in that**
the inner tube (02) is coextruded with at least two different material layers (07, 08), the thermoplastic of the outer material layer (08) of the inner tube (02) having a lower viscosity or a lower melting range than the thermoplastic of the inner material layer (07) of the inner tube (02),
wherein
a) the outer side (09) of the inner tube (02) and the inner side (16) of the adhesion-promoting layer (03) are heated beyond the melting point of the respective thermoplastics and are partially melted, the textile structure on the outer side (18) of the adhesion-promoting layer (03) being at least partially preserved;
b) the outer side (09) of the inner tube (02) and the inner side (16) of the adhesion-promoting layer (03) are brought into contact with each other in a melting zone and are welded together in a material-bonded manner.

2. The method according to claim 1,
**characterised in that**
the outer side (09) of the inner tube (02) and the inner side (16) of the adhesion-promoting layer (03) are heated directly and are partially melted separately from each other and become welded together when the two melting zones come into contact.

3. The method according to claim 1,
**characterised in that**
by means of a heating device (11), the outer side (09) of the inner tube (02) is directly heated and melted to such an extent that the inner side (16) of the adhesion-promoting layer (03) is partially melted and welded to the inner tube (02) upon contact with the melting zone of the inner tube (02) due to heat transmission from the thermoplastic of the inner tube (02).

4. The method according to any of the claims 1 to 3,
**characterised in that**
the outer side (09) of the inner tube (02) is heated beyond the melting point in a heating device (11) and the adhesion-promoting layer (03) is subsequently applied to the heated melting zone on the outer side (09) of the inner tube (02).

5. The method according to any of the claims 1 to 4,
**characterised in that**
the adhesion-promoting layer (03) is formed by winding a textile material strip (14) onto the heated melting zone on the outer side (09) of the inner tube (02).

6. The method according to any of the claims 1 to 4,
**characterised in that**
the adhesion-promoting layer is formed by covering the heated melting zone on the outer side of the inner tube with a textile material hose.

7. The method according to any of the claims 1 to 6,
**characterised in that**
the heating of the outer side (09) of the inner tube (02) and/or of the inner side (07) of the adhesion-promoting layer (03) takes place by supplying hot air (10) or heat radiation.

8. A tube (01) or semi-finished tube (02), in particular for chemical apparatus construction, for storing or for transporting aggressive storage media, comprising a solid inner tube (02) with the inner side (05) of which the storage medium can come into contact and which is made of a thermoplastic polyolefin, and comprising an adhesion-promoting layer (03) applied to the outer side (09) of the inner tube (02), which has a textile structure and is made of a thermoplastic, the textile structure of the adhesion-promoting layer (03) being suitable for mounting a support tube (04) on the outer side (18) of the adhesion-promoting layer (03), the inner tube (02) and the adhesion-promoting layer (03) being produced from thermoplastics of the same type,
**characterised in that**
the inner tube (02) comprises at least two coextruded material layers (07, 08), the thermoplastic of the outer material layer (08) of the inner tube (02) having a lower viscosity or a lower melting range than the thermoplastic of the inner material layer (07) of the inner tube (02), the outer side (09) of the inner tube (02) and the inner side (16) of the adhesion-promoting layer (03) being welded together in a material-bonded manner, the textile structure being preserved on the outer side (18) of the adhesion-promoting layer (03).

9. The tube or semi-finished tube according to claim 8,
**characterised in that**
the adhesion-promoting layer (03) is formed by a textile material strip (14) that is wound or rolled onto the outer side (09) of the inner tube (02) or by a covering material hose.

10. The tube or semi-finished tube according to any of the claims 8 to 9,
**characterised in that**
the adhesion-promoting layer (03) has a three-dimensional textile structure.

11. The tube or semi-finished tube according to claim 10,
**characterised in that**
the textile structure of the adhesion-promoting layer (03) is formed in the manner of a woven, crocheted or knitted fabric.

## Revendications

1. Procédé de fabrication d'un tube (01) ou d'un tube semi-fini (17), en particulier pour la construction d'appareils chimiques, pour le stockage ou pour le transport de milieux à stocker agressifs, comportant un tube (02) intérieur massif, avec le côté (05) intérieur duquel le milieu à stocker peut venir en contact et qui est fabriqué en une polyoléfine thermoplastique, et comportant une couche (03) promotrice d'adhérence qui est appliquée sur le côté (09) extérieur du tube (02) intérieur, qui présente une structure textile et qui est fabriquée en une matière thermoplastique de même type, la structure textile de la couche (03) promotrice d'adhérence étant appropriée à monter un tube (04) de support sur le côté (18) extérieur de la couche (03) promotrice d'adhérence,
**caractérisé en ce que**
le tube (02) intérieur est coextrudé avec au moins deux couches (07, 08) de matière différentes, la matière thermoplastique de la couche (08) de matière extérieure du tube (02) intérieur présentant une viscosité ou une plage de fusion plus faible que la matière thermoplastique de la couche (07) de matière intérieure du tube (02) intérieur,
a) le côté (09) extérieur du tube (02) intérieur et le côté (16) intérieur de la couche (03) promotrice d'adhérence étant chauffés au-dessus du point de fusion de la matière thermoplastique respective et étant partiellement fondus, la structure textile sur le côté (18) extérieur de la couche (03) promotrice d'adhérence étant conservée au moins partiellement;
b) le côté (09) extérieur du tube (02) intérieur et le côté (16) intérieur de la couche (03) promotrice d'adhérence étant mis en contact l'un avec l'autre dans une zone de fusion et étant soudés l'un à l'autre par liaison de matière.

2. Procédé selon la revendication 1,
**caractérisé en ce que**
le côté (09) extérieur du tube (02) intérieur et le côté (16) intérieur de la couche (03) promotrice d'adhérence sont chauffés directement et sont partiellement fondus séparément l'un de l'autre et se soudent l'un à l'autre lors d'un contact des deux zones de fusion.

3. Procédé selon la revendication 1,
**caractérisé en ce qu'**
au moyen d'un dispositif (11) de chauffage, le côté (09) extérieur du tube (02) intérieur est chauffé et fondu directement dans une mesure telle que le côté (16) intérieur de la couche (03) promotrice d'adhérence, lors du contact avec la zone de fusion du tube (02) intérieur et moyennant un transfert thermique de la matière thermoplastique du tube (02) intérieur, est partiellement fondu et soudé au tube (02) intérieur.

4. Procédé selon l'une des revendications 1 à 3,
**caractérisé en ce que**
dans un dispositif (11) de chauffage, le côté (09) extérieur du tube (02) intérieur est chauffé au-dessus du point de fusion et la couche (03) promotrice d'adhérence est ensuite déposée sur la zone de fusion chauffée sur le côté (09) extérieur du tube (02) intérieur.

5. Procédé selon l'une des revendication 1 à 4,
**caractérisé en ce que**
la couche (03) promotrice d'adhérence est formée en bobinant une bande (14) de matière textile sur la zone de fusion chauffée sur le côté (09) extérieur du tube (02) intérieur.

6. Procédé selon l'une des revendications 1 à 4,
**caractérisé en ce que**
la couche promotrice d'adhérence est formée en enfilant une gaine de matière textile sur la zone de fusion chauffée sur le côté extérieur du tube intérieur.

7. Procédé selon l'une des revendications 1 à 6,
**caractérisé en ce que**
le chauffage du côté (09) extérieur du tube (02) intérieur et/ou du côté (07) intérieur de la couche (03) promotrice d'adhérence est effectué en amenant de l'air (10) chaud ou de la radiation thermique.

8. Tube (01) ou tube semi-fini (02), en particulier pour la construction d'appareils chimiques, pour le stockage ou pour le transport de milieux à stocker agressifs, comportant un tube (02) intérieur massif, avec le côté (05) intérieur duquel le milieu à stocker peut venir en contact et qui est fabriqué en une polyoléfine thermoplastique, et comportant une couche (03) promotrice d'adhérence qui est appliquée sur le côté (09) extérieur du tube (02) intérieur, qui présente une structure textile et qui est fabriquée en une matière thermoplastique, la structure textile de la couche (03) promotrice d'adhérence étant appropriée à monter un tube (04) de support sur le côté (18) extérieur de la couche (03) promotrice d'adhérence, le tube (02) intérieur et la couche (03) promotrice d'adhérence étant fabriqués en matières thermoplastiques de même type,
**caractérisé en ce que**
le tube (02) intérieur comprend au moins deux couches (07, 08) de matière coextrudées, la matière thermoplastique de la couche (08) de matière extérieure du tube (02) intérieur présentant une viscosité ou une plage de fusion plus faible que la matière thermoplastique de la couche (08) de matière intérieure du tube (02) intérieur, le côté (09) extérieur du tube (02) intérieur et le côté (07) intérieur de la couche (03) promotrice d'adhérence étant soudés l'un à l'autre par liaison de matière, la structure textile étant conservée sur le côté (09) extérieur de la couche (03) promotrice d'adhérence.

9. Tube ou tube semi-fini selon la revendication 8,
**caractérisé en ce que**
la couche (03) promotrice d'adhérence est formée par une bande (14) de matière textile qui est bobinée ou enroulée sur le côté (09) extérieur du tube (02) intérieur ou par une gaine de matière enfilée.

10. Tube ou tube semi-fini selon l'une des revendications 8 à 9,
**caractérisé en ce que**
la couche (03) promotrice d'adhérence présente une structure textile tridimensionnelle.

11. Tube ou tube semi-fini selon la revendication 10,
**caractérisé en ce que**
la structure textile de la couche (03) promotrice d'adhérence est conçue de type tissu, tricoté ou maillé.
